# EUROPEAN PATENT SPECIFICATION

(11) **EP 2 604 380 B1**
(45) Date of publication and mention of the grant of the patent: **09.11.2016**
(21) Application number: 12197571.8
(22) Date of filing: 17.12.2012
(51) Int. Cl.: B23P 19/00, F16C 43/04, F16C 19/44, F16C 19/48

(54) **Device for assembling mechanical systems comprising elements in relative rotatory motion**
VORRICHTUNGEN ZUM ZUSAMMENBAU VON MECHANISCHEN SYSTEMEN DIE ELEMENTE IN ROTATION RELATIV ZUEINANDER BEINHALTEN
DISPOSITIF POUR L'ASSEMBLAGE DES SYSTÈMES MÉCANIQUES COMPRENANT DES ELEMENTS EN MOUVEMENT DE ROTATION RELATIF

(30) Priority: 15.12.2011 IT VI20110322
(43) Date of publication of application: 19.06.2013
(73) Proprietor: M.A. S.r.l., 40026 Imola (BO) (IT)
(72) Inventor: Berti, Fausto, 40026 Imola (BO) (IT)
(74) Representative: Torti, Carlo Maria Emilio

(56) References cited:
- DE-A1- 4 126 940
- JP-A- 2008 068 374
- JP-A- 2010 214 516
- US-A- 2 075 050
- US-A- 2 312 615
- US-A1- 2008 022 528

## Description

### TECHNICAL FIELD OF THE INVENTION

The present invention relates to a method and a device for automatically assembling parts of mechanical devices wherein a pin or shaft is in relative rotatary motion with respect to an external body in which the pin is housed. In particular, the present invention relates to a method and a device adapted to automate the assembly process of mechanical systems comprising an outer casing, a central pin inserted in a housing hole of the external casing and a plurality of rollers arranged between the pin and the inner surface of the outer casing delimiting the housing hole.

### DESCRIPTION OF THE STATE OF THE ART

Mechanical apparatuses are in the overwhelming majority of cases provided with components whose surfaces are in relative motion with respect to each other. Thus, the typical problem when designing mechanical apparatuses consists of finding the easiest and most effective way for reducing the friction between two parts of the system in relative motion.

A particularly frequent case of relative motion between two components of a mechanical apparatus is rotatary motion. In the general case, a shaft or pin inserted inside a housing and an outer housing body in which the housing is formed are in relative rotatary motion about the longitudinal axis of the shaft or pin.

Common examples of mechanical systems comprising elements in relative rotatary motion can be found in gears. In particular, sun and planet gearing systems are systems of one or more gears called planet gears, which are mounted on a satellite bearing member and rotate about a central pinion also called a sun gear. The satellite bearing member and the satellites are arranged inside an outer gear with inner gear teeth called a crown. Rotation axis of the satellite bearing member and of the sun gear are coincident.

The solution traditionally used for smoothing the rotatary motion and limiting wear of mechanical parts consists of arranging a bearing between the surfaces of the two bodies in relative motion.

Depending on the working principle, bearings may be divided in plane bearings and rolling element bearings. Particularly effective and common types of bearings are rolling element bearings, which use round bodies arranged between the surfaces in relative rotatary motion, in such a way that dynamic friction is reduced by means of the round bodies rolling without sliding in the area included between the two surfaces in relative motion.

More specifically, a rolling element bearing is comprised of an outer casing and an inner casing in relative rotatary motion about an axis. The inner casing is provided with a through hole. In the space defined between the two casings, round bodies are arranged in contact with both the inner surface of the outer casing and the outer surface of the inner casing. The round bodies are designed in such a way that the contact surface between each of them and the inner surfaces of the inner and outer casing is reduced to a point or to a line and that such round bodies roll without sliding in the area included between the outer and the inner casing during the relative motion between the two casings. In general, a central pin is inserted in the through hole or housing inside the inner casing, whereas the outer surface of the outer casing is inserted inside a housing formed in the element of the mechanical system with respect to which the pin is in relative motion.

Depending on the shape of the bodies adapted to roll between the two surfaces, rolling element bearings may be further divided into ball bearings, roller bearings (comprising cylindrical roller bearings, conical roller bearings, spherical roller bearings, etc.) and needle roller bearings. Needle roller bearings use round bodies of a substantially cylindrical shape, whose sections have a significantly smaller diameter than the length of the cylinder, interposed between the outer casing and the inner casing.

Assembling rolling element bearings and, in particular, needle roller bearings turns out to be a hard task, in that so far it has not been possible to automate the operation of inserting the needle rollers between the pin and the outer casing. Such an operation is thus performed manually, thereby requiring a remarkable amount of time, labor and financial resources. Furthermore, the operation of inserting the roller bearing between the shaft or central pin and the outer body in which the pin is housed often entails problems, in that the outer casing of the bearing has to perfectly fit the housing formed in the outer body, whereas the pin has to also perfectly fit the housing in the inner casing of the bearing.

Further examples of devices for assembling bearings, wherein needle rollers have a longitudinal axis parallel to a predefined, horizontal axis and wherein said needle rollers are arranged in one group at a corresponding level along said axis, are known from each of documents US 2075050, JP 2008 068374 and US 2008/022528.

Therefore, the present invention aims at simplifying the design and the implementation of mechanical systems in which an outer casing provided with a housing and a central element of the system, partially or completely housed in the housing of the outer casing, are in relative rotatary motion. Moreover, the present invention aims at providing a method and an apparatus for automatically assembling such mechanical systems, so as to enable significant time saving time and labor, thereby reducing costs.

### BRIEF DESCRIPTION OF THE PRESENT INVENTION

The present invention is based on several innovative considerations. First of all, the present invention is based on the concept that designing and implementing mechanical systems, wherein a central element and an outer casing having a housing in which the central element is at least partially housed are in relative rotatary motion, can be simplified and made more cost-effective by interposing a plurality of rollers directly between the outer surface of the element at least partially housed in the housing of the outer casing and the inner surface of the outer casing facing the housing in which the central element is inserted. The present invention is further based on the innovative concept that assembling mechanical systems such as those outlined above can be made faster and automatic thanks to dedicated truing or alignment means, in which the rollers are arranged on several levels, the rollers on each level being arranged in the same configuration as in the mechanical system and thanks to moving means, which allow the rollers to be moved simultaneously from the truing means to the space in which the rollers are housed after the system has been assembled, that is to the space included between the inner surface of the outer casing and the portion of central element housed in the through hole of the outer casing. It is clear that a device implementing this concept allows the assembly operations of the mechanical systems described above to be automatic.

Based on these considerations, the device for assembling mechanical systems having parts in relative rotatary motion according to main claim 1 is hereby proposed. Such mechanical systems comprise an outer casing defining a cavity, a central element having at least one portion housed in the cavity of the outer casing and a plurality of rollers, each of which is housed between the outer casing and the portion of central element housed in the cavity of the outer casing. The cavity defined by the outer casing may be, for instance, a through hole or a blind hole. The device comprises truing means adapted to arrange each roller in such a way that each roller has longitudinal axis parallel to a predefined axis substantially vertical and that the rollers are arranged in two or more groups. Each group of rollers is arranged at a corresponding level along the predefined axis. The rollers belonging to each group are arranged in a reciprocal position substantially corresponding to their final reciprocal position inside the mechanical systems to be assembled. The device further comprises moving means adapted to simultaneously move the groups of rollers along a direction substantially parallel to the predefined axis, so as to position at least one of the groups of rollers in a predefined position in which the groups of rollers are assembled with the outer casing and the central element of the mechanical system.

Therefore, after the rollers have been loaded into the truing means, one can act upon the moving means so as to simultaneously insert the rollers into the mechanical system. The present invention thus enables implementing mechanical systems with parts in relative rotatary motion without using bearings. Furthermore, the present invention allows the assembly operations of such a mechanical system to be automated, speeded up and economized.

According to a further embodiment of the present invention, the truing means comprise a substantially cylindrical central body housed in a housing with a circular section defined by an outer body, the longitudinal axis of the central body being coincident with the longitudinal axis of the housing in the outer body and the section of the central body having a smaller diameter than the diameter of the section of the housing in the outer body. In this manner, the outer surface of the central body facing the housing and the inner surface of the outer body facing the housing define a cavity having an annular cross-section.

The radius of the cross-section of the housing in the outer body in which the central body is housed and the radius of the cross-section of the central body may be chosen so that the difference between the first and the second radius is equal to or slightly larger than the diameter of the rollers. In this manner, the rollers, housed in the cavity between the central body and the inner surface of the outer body of the truing means, are constrained to have longitudinal axis parallel to the common longitudinal axis of the main body and of the housing in which this is housed.

According to a further embodiment of the device according to the present invention, the central body and the outer body of the truing means are in relative rotatary motion about the common longitudinal axis of the central body and of the housing in the outer body in which the central body is housed.

This allows the operations of inserting the rollers into the truing means to be simplified and speeded up.

According to a further embodiment, the device comprises a system for introducing the rollers into the truing means. The introduction system comprises an arm extendable along a direction substantially perpendicular to the alignment direction of the rollers housed in the truing means. The introduction system further comprises an introduction head, fixedly connected to the extendable arm, adapted to introduce each roller into the cavity defined by the central body and by the outer body of the truing means.

The introduction means allow the rollers to be introduced one by one into the cavity of the truing means having an annular cross-section.

### BRIEF DESCRIPTION OF THE FIGURES

Further features and advantages of the present invention will appear more clearly from the following description of the embodiments of the device according to the present invention represented in the drawing tables. In the drawing tables identical and/or similar and/or corresponding parts are identified by the same reference numbers or letters. In particular, in the figures:
Figure 1(a) represents a cross-section of an embodiment of the device according to the present invention.
Figure 1(b) represents a zoomed-in view of the device shown in Figure 1(a).
Figure 2 represents a cross-section of a second embodiment of the device according to the present invention.
Figures from 3(a) to 3(e) show a top view of the device according to the present invention during subsequent stages of the introduction process of a group of rollers into the cavity of the truing means.
Figure 4 represents the device according to the second embodiment shown in Figure 2, after two groups of rollers separated by a spacing element have been introduced into the truing means.
Figures from 5(a) to 5(c) show particulars of the device according to the second embodiment during insertion of the spacing elements between two groups of rollers.
Figures from 6(a) to 6(f) show a cross-sectional view of the device according to the first embodiment of the present invention during subsequent stages of assembling a mechanical system comprising parts which may rotate with respect to each other.
Figures from 7(a) to 7(f) show a cross-sectional view of a device according to the second embodiment of the present invention during subsequent stages of assembling a further mechanical system comprising parts which may rotate with respect to each other.

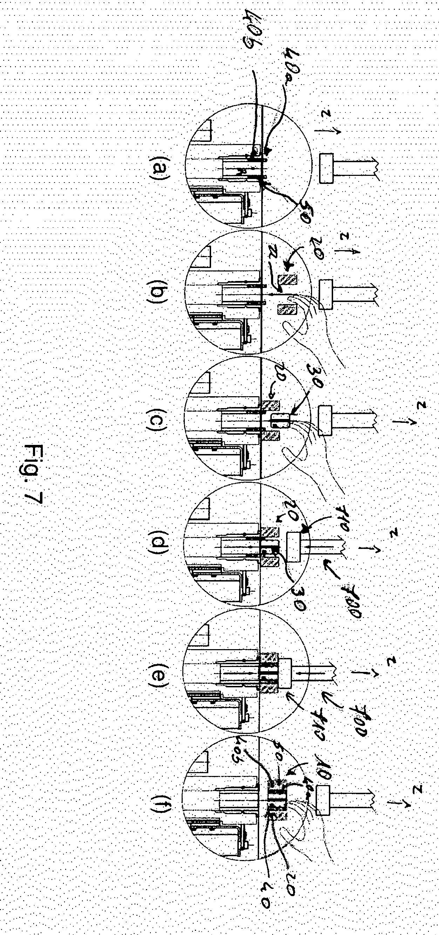

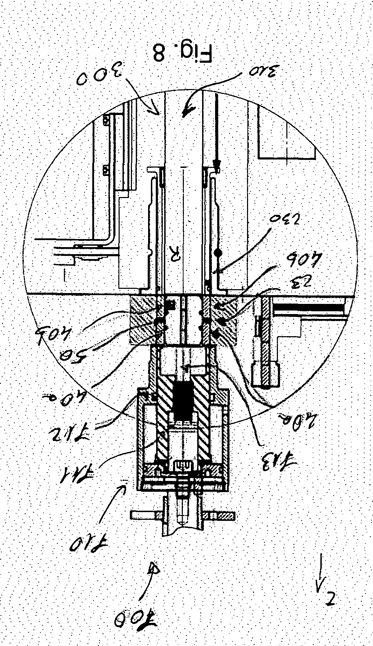

Figure 8 represents a zoomed-in view of Figure 7(e).

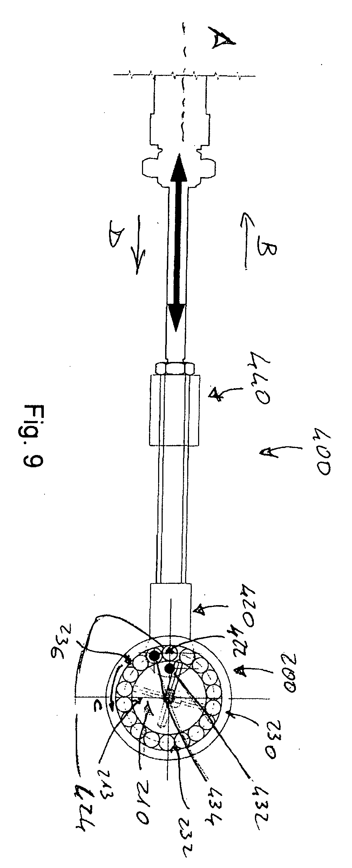

Figure 9 represents a top view of the introduction means of the rollers, which emphasizes the system for controlling the introduction of the rollers into the cavity of the truing means.

### DETAILED DESCRIPTION OF THE PRESENT INVENTION

Although in the following the embodiments of the present invention represented in the drawing tables will be described, it should be appreciated that the present invention is not restricted to such embodiments. Conversely, the particular embodiments described below clarify several aspects of the present invention, whose range and scope are defined by the claims.

It is here specified that the terms "horizontal" and "vertical" always indicate a substantially parallel and perpendicular direction to a conventional ground plane, respectively.

The terms "above" and "below" are then always referred to the direction of an oriented vertical axis. Such an oriented vertical axis is indicated in the description and in the drawing tables as z-axis. Thus, for instance, when it is referred to a point A lying "above" ("below") the point B, the concept is expressed that the segment of the z-axis delimited by the projection of point B on the z-axis and by the projection of point A on the z-axis and oriented in the sense from the projection of B to the projection of A, is oriented in the positive (negative) direction of the z-axis. Analogously, the expression "upwards" ("downwards") indicates a parallel direction to the z-axis and oriented in the positive (negative) direction of the z-axis.

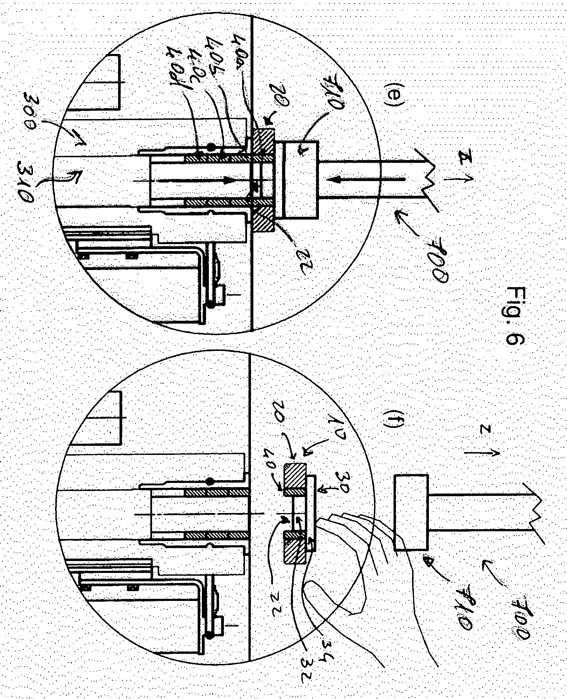

The device according to the present invention aims at automating the assembly procedure of the mechanical systems 10 of the type shown for instance in Figures 6(f) and 7(f). The system 10 comprises an outer casing 20 comprising a housing or through hole 22, a central element 30 having at least a portion 32 housed in the housing 22 of the outer casing 20 and two or more groups (40a, 40b) of rollers 40 arranged between the portion 32 of the central element 30 housed in the housing 22 of the outer casing 20 and the inner surface of the outer casing 20 facing the housing 22 of the outer casing. Optionally, safety elements 50 may be interposed between adjacent groups of rollers 40. Alternatively, the housing 22 of the outer casing may be a blind hole.

The housing 22 of the outer casing 20 has a circular cross-section, as well as the cross-section of the portion 32 of central element 30 housed in the housing 22. The longitudinal axes of the housing 22 of the outer casing 20 and of the portion 32 of central element 30 housed in the housing 22 are substantially coincident. This common longitudinal axis will in the following be indicated as the longitudinal axis of the mechanical system 10.

The central element 30 may comprise a cover element 34 and a portion housed in the housing 22 of the outer casing 20, as shown in Figure 6(f). Alternatively, the central element 30 may be a substantially cylindrical element such as a pin or a false pin, as shown in Figures 7(f) and 8.

The rollers 40 are housed in the space comprised between the inner surface of the outer casing 20 which defines the housing 22 and the outer surface facing the housing 22 of the portion 32 of central element 30 housed in the housing 22. The rollers 40 housed in the space between the outer casing 20 and the portion 32 of central element 30 inserted in the housing 22 of the outer casing have longitudinal axis parallel to the longitudinal axis of the housing 22 and of the portion 32 of central element 30 housed therein, i.e. to the axis of the mechanical system 10.

The rollers 40 have a substantially cylindrical shape and their diameter is chosen in such a way that, once the mechanical system 10 has been assembled and completed, the outer surface of the rollers 40 abuts on both the outer surface of the portion 32 of central element 30 housed in the housing 22 and the inner surface of the outer casing 20 facing the housing 22.

The outer casing 20 and the central element 30 are free to rotate with respect to each other about the longitudinal axis of the housing 22 and of the portion 32 of central element housed in the housing 22, or axis of the system 10. During the relative rotatory motion of the central element 30 with respect to the outer casing 20, the rollers 40 are free to rotate about their own longitudinal axis, thus decreasing the friction between the moving parts.

The outer casing 20 of the mechanical system 10 may be, for example, a cylindrical body, a wheel, a gear, a pulley or other analogous mechanical components commonly used in mechanical apparatuses and known to the skilled person. The central element 30 of the mechanical system 10 may comprise a portion 32 housed in the housing 22 defined by the outer casing 20 and a covering element 34 arranged on top of the outer casing 20 and abutting onto the upper edge of the outer casing 20, as shown for example in Figure 6(f). Alternatively, the central element 30 may be a pin or a shaft, partially or totally housed in the housing 22 of the outer casing 20, as shown for example in Figure 7(f). The mechanical system 10 can then be provided with other types of round bodies replacing the rollers 40 such as, for example, spheres, cylindrical rollers, conical rollers, spherical rollers, etc.

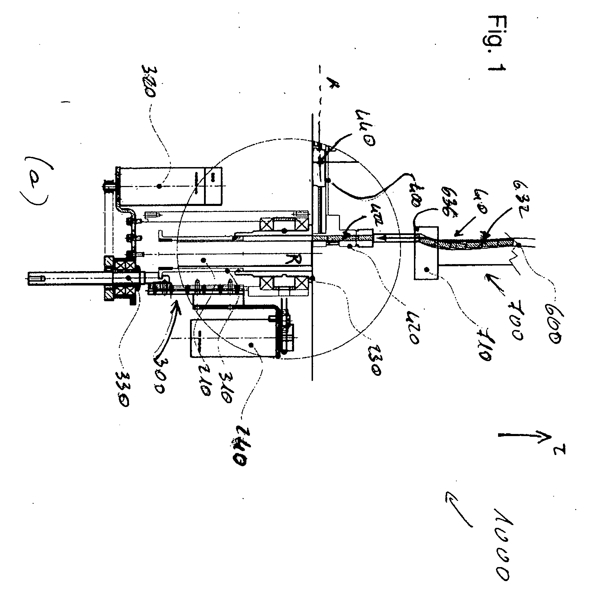

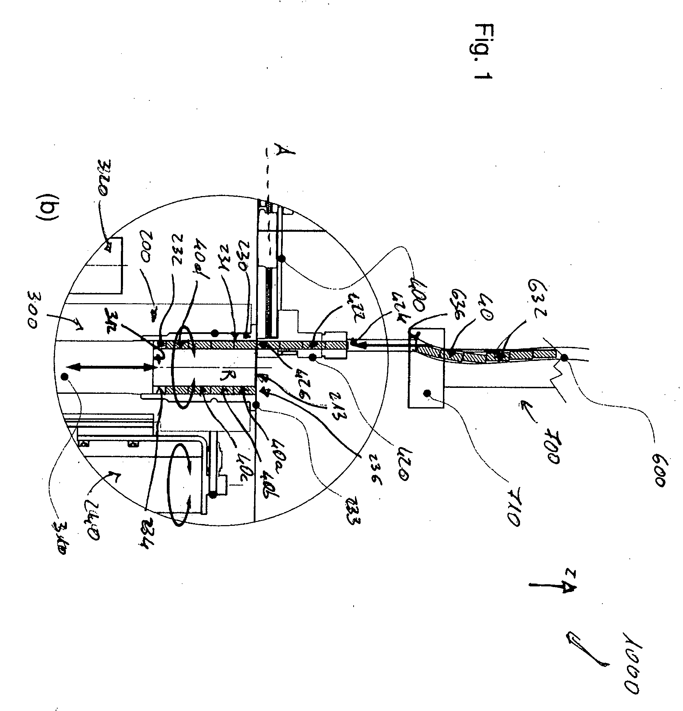

As apparent from Figures 1(a) and 1(b), the device 1000 according to the embodiment of the present invention represented therein comprises truing means 200 of the rollers 40. Such truing means 200 comprise a central body 210, of a substantially cylindrical shape, housed in a housing 234 defined by an outer body 230. The housing 234 has a circular cross-section. The longitudinal axis R of the central body 210 coincides with the longitudinal axis of the housing 234 in which the central body 210 is housed. In the embodiments shown in Figures 1(a) and 1(b), the longitudinal axis R is substantially vertical.

The radius of the cross-section of the housing 234 defined by the outer body 230 and the radius of the section of the main body 210 are chosen so that the difference between the first and the second radius is equal to or, preferably, slightly larger than the diameter of the cross-section of the rollers 40. In this manner, the side surface 211 of the central body 210 facing the housing 234 and the inner surface 231 of the main body 210 delimiting the housing 234 define a cavity 232 whose section is an annulus. For example, if the average diameter of the rollers is of 5 mm, the difference between the radius of the housing 234 and the radius of the section of the central body 210 may be between 5.2 and 5.7 mm and, preferably, may be of about 5.5 mm. The longitudinal axis of the cavity 232 is necessarily coincident with the longitudinal axis R of the central body 210 of the truing means and with the longitudinal axis of the housing 234 defined by the outer body 230 of the truing means.

This cavity 232 is adapted to receive the rollers 40. A roller 40 housed in the cavity 232 maintains a position in which the longitudinal axis of the roller 40 is parallel to the common longitudinal axis R of the central body 210 and of the cavity 232. This is due to width and the arrangement of the cavity 232, as well as to the system of inserting the rollers 40 into cavity 232. Furthermore, due to the choice of the cross-sections of the central body 210 and of the housing 234 in the outer body 230 of the truing means 200, the rollers 40 introduced into cavity 232 abut onto the side surface of the central body 210 facing cavity 232 and/or with the inner surface of the external body 230 facing cavity 232.

The rollers 40 are introduced into the cavity 232 through an opening 236 formed in correspondence to the upper ends 213, 233 of the central body 210 and of the outer body 230 of the truing means 200.

The central body 210 of the truing means 200 and the housing 234 in which the central body is housed have a length (dimension along the longitudinal axis R) greater than the length of the rollers 40. In this manner, as shown in Figure 1(b), several groups 40a, 40b, 40c, 40d of rollers 40 may be superimposed or stacked at different levels along the axis R inside the cavity 232. A group of rollers at a certain point, or level, P along axis R is identified by all rollers 40 intercepted by a plane perpendicular to axis R and intercepting axis R in point P. Furthermore, the rollers 40 belonging to the same group are arranged so as to completely surround the central body 210 of the truing means 200.

Advantageously, the outer body 230 may have cylindrical symmetry, with a longitudinal axis coincident with axis R. In this manner, the system comprised of the central body 210, the outer body 230 and the cavity 232 define thereby has cylindrical symmetry with respect to axis R. Outer body 230 may advantageously comprise an upper end 233 comprising a flanged portion adapted to abut on a portion of the mechanical system to be assembled, so as to facilitate assembly operations.

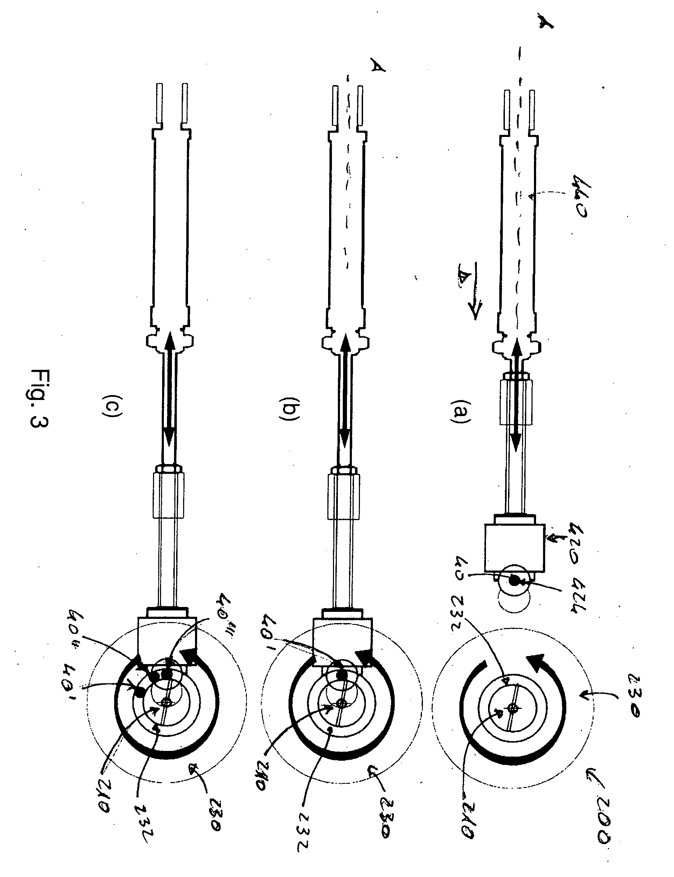

The outer body 230 and the central body 210 of the truing means 200 may rotate with respect to each other about longitudinal axis R of the central body and of the cavity 232. In the embodiment shown, for example, in Figures 1(a), 1(b) and 3(a) - 3(e), the external body 230 of the truing means rotates about the central body 210, which is kept fixed. The rotation of the external body 230 may be both in a clockwise and in a counter-clockwise direction. According to this embodiment, outer body 230 may have a substantially hollow cylindrical shape with walls of a predetermined thickness delimiting the housing 234 within which the central body 210 is housed. Advantageously, outer body 230 may in turn be housed in a housing with a circular cross-section and having a longitudinal direction substantially coincident with axis R. This housing could be formed within the main body of device 1000. In this manner, the operation of causing the outer body 230 to rotate with respect to the main body of device 1000 and to central body 210 is made easier.

Alternatively, the central body 210 may rotate, in a clockwise or counter-clockwise direction about the axis R, whereas the outer body 230 is kept fixed. Alternatively, both the outer body 230 and the inner body 210 of the truing means 200 may rotate about axis R. The speed of rotation of the outer body 230 with respect to the central body 210 may be varied. The rotatory motion of the outer body 230 with respect to the central body 210 may be induced by an actuator 240 such as an electric motor, a hydraulic motor or the like.

Again with reference to Figures 1(a) and 1(b), the device 1000 further comprises moving means 300 comprising a hollow cylindrical body 310 whose longitudinal axis coincides with the longitudinal axis R of the central body 210 of the truing means. The cross-section of the cylindrical body 310 is such that both the outer and the inner diameter are intermediate between the diameter of the cross-section of the central body 210 of the truing means and the diameter of the cross-section of the cavity 234 in which the central body 210 is housed.

The cylindrical body 310 may slide or translate along the axis R between the outer surface 211 of the central body 210 and the inner surface 231 of the outer body 230. The hollow cylindrical body can be manually translated or can be actuated by an actuator comprising an electrical motor, a hydraulic motor or the like. According to the embodiment shown in Figures 1(a) and 1(b), the cylindrical body 310 is caused to move by an actuator 320. Furthermore, moving means 300 can also comprise a control system 330 of the position and of the movement of the cylindrical body 310.

The cylindrical body 310 defines, in correspondence to its closest end to the opening 236, an abutting surface 312 substantially transverse to the longitudinal axis of the cylindrical body. This abutting surface 312, shaped like an annulus, abuts on an end of each roller 40 belonging to group 40d of rollers 40 which are closest to the cylindrical body 310. The translation along axis R of the cylindrical body is such that the abutting surface 312 of the cylindrical body 310 may arrive up to the level of the opening 236 between the end 213 of the central body 210 and the end 233 of the outer body 230.

As shown in Figures 1(a) and 1(b), the device 1000 according to the present invention further comprises introduction means provided for introducing the rollers 40 into the truing means 200. The introduction means 400 comprise an arm 440 which may translate along a direction A substantially perpendicular to the direction of the longitudinal axis R of the cavity 232 and of the central body 210 of the truing means 200. In the embodiment shown in Figure 1, axis A is substantially horizontal. Introduction means 400 also comprise a head 420, firmly fixed to the arm 440. The head 410 comprises an introduction conduit 422 of the rollers 40 comprising an inlet 424 and an outlet 426. The rollers 40 within the conduit 422 are aligned along the same axis. This axis is parallel to the longitudinal axis R of the cavity 232 and of the central body 210. The rollers 40 enter the conduit 422 through the inlet 424 and cross the conduit 422 down to the outlet 426 pushed by the action of the force of gravity. The introduction head 410 may comprise means adapted to detect the entrance of each roller 40 into the conduit 422 through the inlet 424 and the exit of each roller from the conduit 422 through the outlet 426. Such means may also determine the number of rollers present in the conduit 422 at a given time instant.

Figures 1(a) and 1(b) show the introduction means 400 in the position in which the head 420 is adapted to introduce one roller 40 at a time into the cavity 232 defined by the inner body 210 and by the outer body 230 of the truing means 200. In this position, the arm 440 translates the head 420 along axis A in a position such that the outlet 426 of the conduit 422 is in correspondence with the opening 236 communicating with the cavity 232.

The rollers 40 may be inserted into the conduit 422 of the introduction means 400 by means of dedicated feeding or supply means 600. The supply means 600, as shown in Figure 1, comprise a conduit 632 whose outlet 636 is in correspondence with the inlet 424 of the conduit 422 of the introduction means 400. The rollers 40 along the conduit 632 are aligned in single file, i.e. one behind the other.

The rollers 40 may be inserted one by one in a sequence into the conduit 632 by means of a dedicated alignment system not shown in the figures. The alignment device comprises a tank having a convex bottom onto which the rollers are arranged in a random order. The alignment device also comprises a spiral protruding from the inner wall of the tank. The spiral comprises a first end arranged on the bottom of the tank and a second end in correspondence with the upper edge of the tank. The spiral has a width slightly larger than the diameter of the cross-section of the rollers. During assembly operations, the tank is caused to vibrate so that the rollers arrange themeselves along the spiral in single file, i.e. one after the other. Due to the vibration, the rollers move along the spiral in such a way that each roller reaches the end of the spiral on the upper edge of the tank. This edge of the spiral is situated in correspondence with the inlet of the conduit 632 of the supply means 600. In this manner, one roller 40 at a time can be introduced into the conduit 632.

As shown in Figures 1(a) and 1(b), the device 1000 according to the embodiments represented therein further comprises pressing means 700 arranged above the truing means 200. The pressing means 700 comprise an abutting element 710 adapted to abut onto the edge of the outer casing 20 and/or onto the edge of the central element 30 facing the pressing means 700. As will be described more in detail in the following, during the assembly process of the mechanical system 10, the pressing means 700 are adapted to exert a reaction to a force which would tend to shift the outer casing 20 and/or the central element along a direction substantially parallel to axis R and in the direction which goes from the truing means 200 to the pressing means 700.

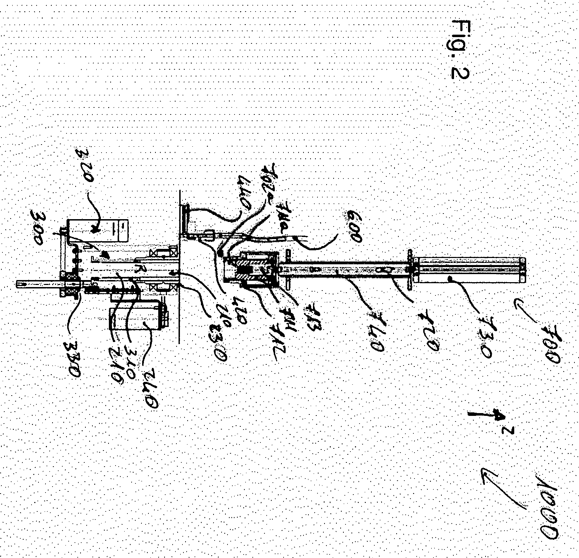

According to a second embodiment of the device 1000 shown in Figure 2, the abutting body 710 of the pressing means 700 comprises a central presser 713, an inner presser 711 and an outer presser 712. The inner presser 711 is arranged between the central presser 713 and the outer presser 712.

The central presser 713 is adapted to exert a force directly on the central element 30 during assembly, when the central element is inserted into the through hole 22 of the outer casing 20, as shown in Figure 7(e).

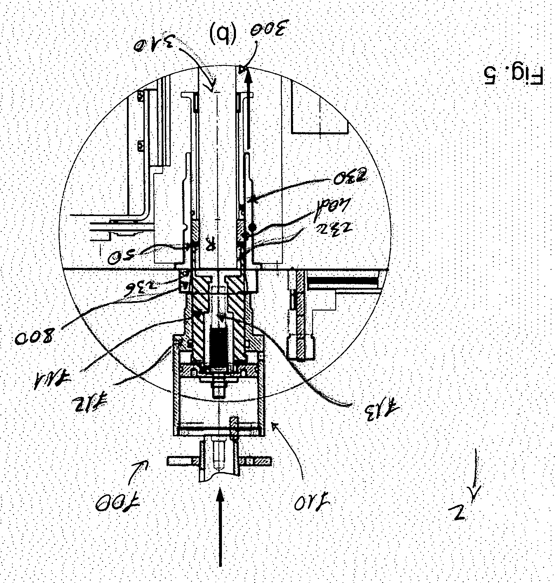

The inner presser 711 is adapted, through its end 711 a, to both center the central element 30 inside the through hole 22 of the outer casing 20 (Figure 7(e)), and insert into the cavity 232 dedicated safety means 50 down to a predefined position along axis R (Figure 5(b)). In the following, the features of the safety means 50 will be described in further detail and the process of introducing the safety means into the cavity 232 will also be described.

The inner presser 712 is adapted, during assembly of the system 10, to exert a force onto the outer casing 20 when this is situated in proximity to the truing means 200, so that the through hole 22 of the outer casing is in correspondence with the opening 236 communicating with the cavity 232 of the truing means 200. This force may be exerted, for example, by means of the abutting end 712a of the outer presser 712.

Figure 2 shows that the pressers can be moved by means of actuating means 730, for example, by pneumatic actuating means. The actuating means 730 may operate on the various pressures through an arm 740.

Figure 2 also shows that, according to the embodiment of the device according to the present invention, the pressing means 700 also comprise measure means 720. The measure means 720 are adapted to measure the difference in one or more predefined parameters relative to the pressing means 700. For example, the measure means 720 may be adapted to measure the difference in one or more predefined parameters relative to the inner pressers 711 and to the outer pressers 712. For example, the measure means 720 may be adapted to measure the difference of the positions of the inner pressers 711 and of the outer pressers 712, for example, by measuring the height of the two pressers or by measuring the difference in height between the two pressers.

The operating method of the device 1000 is described in the following and is the same, except for the differences indicated in the following, in both embodiments shown in Figures 1(a) and 2, respectively.

First of all, two or more groups of rollers 40 are introduced and piled up in the cavity 232. Safety means may also be introduced so as to act as spacers between two groups of rollers 40 subsequently introduced into the cavity 232.

Assembly of a mechanical system 10 starts with introducing a group of rollers 40 into the truing means 200. Figures from 3a to 3e show the subsequent stages of inserting a group of rollers 40 into the truing means 200.

The first group 40d of rollers 40 is introduced in the truing means as described in the following.

During the introduction procedure of the rollers 40 into the truing means 200, the central body 210 and the outer body 230 are in relative rotatary motion about axis R. In the preferred embodiments shown in Figures from 3a to 3e the central body 230 rotates in a counter-clockwise direction with respect to the central body 210, which is instead fixed. Alternatively, the external body 230 may rotate in a clockwise direction. According to the embodiment wherein the outer body 230 rotates and the central body is fixed with respect to the main body of device 1000, the hollow cylindrical body 310 rotates about axis R with the same angular velocity and in the same direction of the outer body 230 while inserting rollers 40 into assembly cavity 232.

Alternatively, the central pin 210 may rotate. According to this embodiment, the hollow cylindrical body 310 rotates about axis R with the same angular velocity and in the same direction of the central body 210 while inserting rollers 40 into assembly cavity 232.

The angular velocity of hollow cylinder 310, of outer body 230 or of central body 210 is variable and depends in general on the length and on the diameter of the cross-section of rollers 40. For example, for a roller 40 having a cross-section of 5 mm, a rotation velocity of, for example, the outer body 230 and the hollow cylinder 310 of 120 rotations per minute can be used.

From the rest position shown in Figure 3(a), the head 420 of the introduction means 400 is translated by means of the arm 440 along axis A, so that the axis of the conduit 422 is situated in correspondence to the opening 236 communicating with the cavity 232, as shown in Figure 3(b).

When the introduction head 420 is in this position, a first roller 40' may be introduced into the cavity 232 between the central body 210 and the outer body 230 of the truing means 200. A detection system included for instance in the head 420 may detect the number of rollers 40 introduced into the cavity 232, as more extensively disclosed in the following with reference to Figure 9.

Since longitudinal axis R of the central body 210 and of the cavity 232 is substantially vertical, the first roller 40' introduced into the cavity 232 descends along the cavity until its furthest end to the opening 236 abuts onto surface 312 of the hollow cylindrical body 310 of the moving means 300.

After reaching the abutting surface 312 of hollow cylindrical body 310, the roller 40' just introduced into the cavity is induced to rotate within cavity 232 in a conjunction with outer body 230 or central body 210 and with the hollow cylindrical body 310. The rotation motion of roller 40' introduced into cavity 232 in caused by the friction with the inner surface 231 of the outer body 230 or with the outer surface 211 of the central body 210, depending on whether the outer body 230 or the central body 210 rotate with respect to the main body of device 1000. Furthermore, the rotatory motion of the roller 40' within cavity 232 is also caused by the friction between the abutting surface 312 of hollow cylindrical body 310 and the end of roller 40' abutting on abutting surface 312 of hollow cylindrical body 310. The longitudinal axis of the roller 40' thus performs a circular motion about axis R inside the cavity 232 in the same sense and with the same angular velocity of central body 210 or, preferably, of outer body 230. In the case shown in Figures 3(a) - 3(e) such a rotatory motion is in a counter-clockwise direction. In this manner, right below the outlet 426 of the conduit 422 of the introduction means 400 a void space is formed inside the cavity 232 which a roller 40" subsequently introduced into the conduit 422 may occupy.

Thus, a second roller 40" is introduced into the cavity 232 from the conduit 422. As shown in Figure 3(c), in an analogous manner as for the first roller 40', the second roller 40" introduced into the cavity 232 descends along the lower end of the cavity 232 furthest from the opening 236 until it reaches the abutting surface 312 of the cylindrical body 310. After reaching the abutting surface 312 of cylindrical body 310, the longitudinal axis of the second roller 40" inserted into the cavity 232 performs a rotatory motion about axis R, in an analogous manner to the case of the first roller 40'. In this manner, the third roller 40"', after exiting the conduit 422 through the outlet 426, may be introduced into cavity 232. Such a procedure is repeated for all subsequent rollers 40.

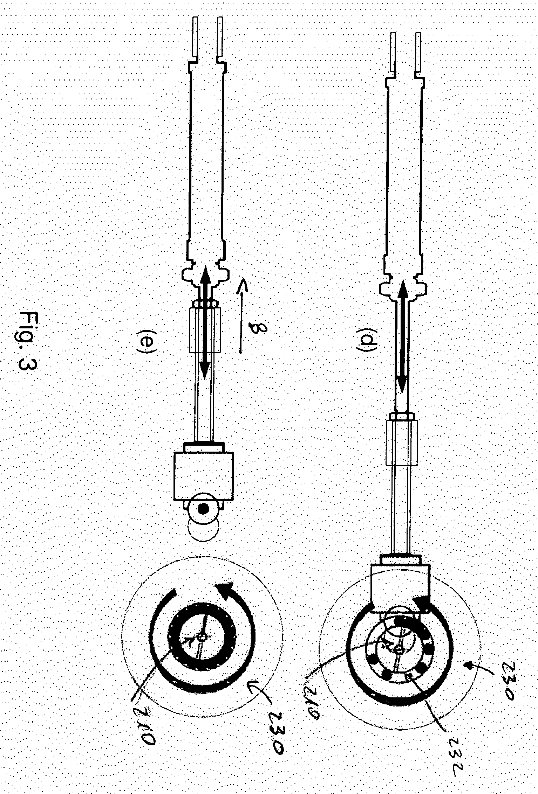

Figure 3d shows the truing means 200 in a stage in which a group of rollers 40 has been partially inserted. The insertion process of a group of rollers 40 ends when all rollers 40 in the same group are adjacent to each other, so that no space between two adjacent rollers 40 housed in the cavity 232 may form, in which a third roller 40 coming from the conduit 422 may be inserted. Such a situation is shown in Figure 3(e).

Once a level of rollers 40 has been fully inserted, if no other rollers 40 have to be introduced at other levels superimposed to the first level, the introduction head 420 may be retracted by means of the arm 440 so as to cause it to translate in the sense indicated by arrow B in Figure 3(e).

Alternatively, as shown in Figure 1(b), a second group 40c of rollers 40 may be introduced superimposed to the first group 40d of rollers 40. The second group 40c of rollers 40 is introduced into the cavity 232 in an analogous manner to the first group 40d. The difference with respect to introducing the first group 40d is that the rollers 40 of the second group 40c, once they have been introduced into the cavity 232, abut on the rollers 40 of the first group 40d. In particular, the further end from opening 236 of each roller 40 belonging to the second group 40c abuts on the closer end to the opening 236 of at least one roller 40 belonging to the first group 40d previously introduced.

Once the introduction of the second group 40c of rollers 40 has been completed, the second group 40b may be introduced and so on for the subsequent groups. Figure 1 (b) represents the case in which four groups 40a, 40b, 40c and 40d have been subsequently introduced into the cavity 232.

According to a preferred embodiment of the present invention, outer body 230 rotates with respect to central body 210, which is kept fixed with respect to the main body of device 1000. Such an embodiment is advantageous in that, after each roller 40 introduced into cavity 232 abuts on an end of hollow body 310 or with an end of one or more rollers previously introduced into cavity 232, it starts to rotate about axis R, due to the friction with the underlying surface and with the inner surface of outer body 230 within which the roller 40 is in contact. The centrifugal force resulting from the rotatory motion pushes rollers 40 into cavity 232 against the inner wall 231 of outer body 230. In this manner, the pressure exerted by the centrifugal force onto rollers 40 causes a strong or enhanced friction between the inner surface 231 of outer body 230 and the portion of the side surface of the rollers 40 in contact with the inner surface 231 of the outer body 230. This friction force is one of the forces responsible for the rotatory motion of the rollers 40 in cavity 232, in that it tends to cause the outer body 230 to drag rollers 40 in its rotatory motion about axis R. Therefore, the rotatory motion of rollers 40 about axis R is induced also by the friction between the rollers 40 and the inner surface 231 of outer body 230. Thus, if central body 230 rotates about axis R with respect to a fixed central body 230, the centrifugal force acting upon the rollers can be used so to facilitate the rotatory motion of rollers 40 in cavity 232.

The arrangement of the rollers 40 at each level inside the truing means is such, that the reciprocal position of the rollers 40 belonging to each group is the same as the reciprocal position of the rollers 40 inside the mechanical system 10 after assembly has been completed. The rollers 40 belonging to the same group are arranged at the same height or at the same level along axis R. Furthermore, the truing means 200 are designed so that each roller 40 in the cavity 230 has, except for rotations about access R, a longitudinal axis coincident with the longitudinal axis of the same roller 40 in the final position inside an assembled mechanical system 10, if the mechanical system 10 has a longitudinal axis coincident with axis R.

Before introducing the rollers 40 into the cavity 232 of the truing means 200, the hollow cylindrical body 210 of the moving means 300 may be translated at a height along axis R such that the distance between the abutting surface 312 of the cylindrical body 310 and the plane on which the opening 236 lies, is greater than or equal to the length of the rollers 40 multiplied by the number n of groups of rollers 40 which are to be introduced. In this manner, the cavity 232 has a sufficient length for housing the n groups of rollers 40 piled up one on top of the other which are to be introduced into the cavity 232.

Alternatively and preferably, the following procedure may be observed when introducing the various groups of rollers 40 into the cavity 232.

Reference is again made to Figure 1 (B). Before introducing the first group of rollers 40d, the cylindrical body 310 is translated along axis R so that the distance between the abutting surface 312 and the plane of the opening 236 is equal to or slightly greater than the average height of the rollers 40. The first group 40d of rollers 40 is then introduced as previously described. Once the introduction of the first group 40d of rollers 40 has been completed, the cylindrical body 310 is then translated downwards by a distance equal to the average length of the rollers 40. In this manner, the distance between the abutting surface 312 of the cylindrical body 310 and the plane of the opening 236 is equal to or slightly greater than twice the average length of the rollers 40. The first group 40d of the rollers 40 already inserted into the cavity 232 follows the downward translation of the cylindrical body 310, each roller 40 being pushed by the force of gravity. When the translation of the cylindrical body 310 has ended, the motion of the first group 40d of rollers 40 also ends, with the rollers in the first group 40d abutting on the abutting surface 312 of the cylindrical body 310.

At this point, the second group 40c of rollers 40 may be introduced in an analogous manner as carried out with the first group 40d.

After the second group 40c has been introduced, the cylindrical body 310 is once again translated downwards by a distance equal to the average length of the rollers 40. In this manner, the distance between the abutting surface 312 of the cylindrical body 310 and the plane of the opening 236 is equal to or slightly greater than 3 times the average length of the rollers 40.

The first and second group 40d, 40c of rollers 40 are translated by the same distance pushed by the force of gravity, analogously to the previous case. Once the first group 40d of rollers 40 abuts onto the abutting surface 312 of the cylindrical body 310 and the second group 40c of rollers 40 abuts on the first group 40d, the third group 40b of rollers 40 can be introduced. This procedure continues in an analogous manner for the groups of rollers which are to be subsequently introduced.

A further insertion procedure consists of introducing, alternatively, groups of rollers 40 and safety elements 50 interposed between two adjacent groups of rollers 40. For this type of introduction, the embodiment of the device according to the present invention shown in Figure 2 is preferably used. Alternatively, the embodiments shown in Figures 1(A) and 1(B) may be used.

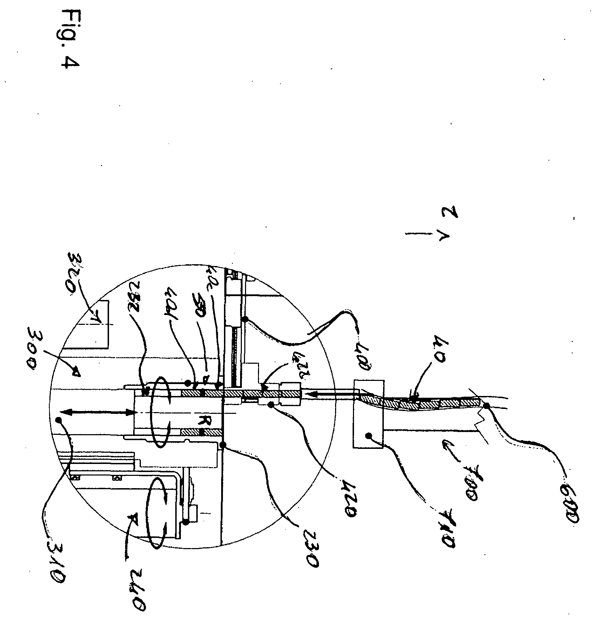

Figure 4 shows the case in which two groups of rollers 40d and 40c and a series of safety means 50 between the first and the second group of rollers have been introduced into the cavity 232. The safety means 50 are such that, after the mechanical system 10 has been assembled, the portion 32 of central element 30 housed in through-hole 22 of the outer casing 20 is prevented from translating along the axis of the through-hole 22 and thus, from exiting therefrom.

Examples of such safety means are seeger rings or circlips. For example, again with reference to Figure 4, the safety means 50 may comprise a first bearing disc, a seeger ring and a second bearing disc, wherein the seeger ring is interposed between the first bearing disc and the second bearing disc. The first bearing disc is thus interposed between the group of rollers 40 situated at level 40d and the seeger ring, whereas the second bearing disc is interposed between the seeger ring and the group of rollers 40 situated at the level 40c.

In order to obtain in the truing means 200 the configuration of rollers 40 and safety means 50 shown in Figure 4, one can proceed as follows.

The first group 40d of rollers 40 is introduced into the cavity 232 in the previously described manner.

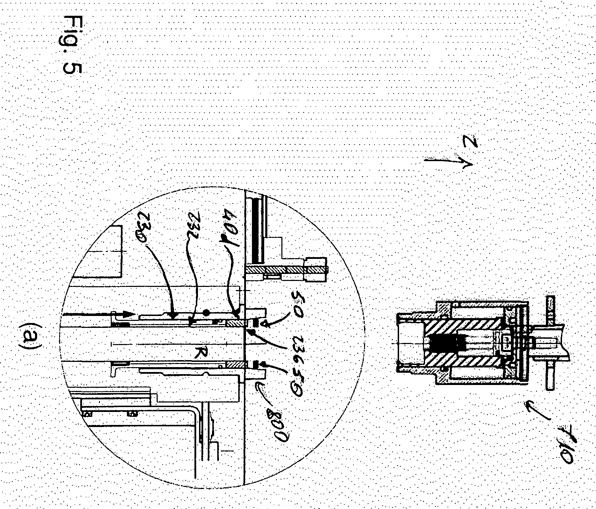

Guiding means 800, shown in cross-section in Figure 5(a) and having substantially cylindrical symmetry, are then placed in correspondence to the opening 236 communicating with the cavity 232. Guiding means 800 are then arranged in such a way that the axis of cylindrical symmetry of the guiding means coincides with the longitudinal axis R of the main body 210 of the truing means 200. In this manner, the central element 210 and the cavity 232 are centered with respect to the guiding means 800. Guiding means 800 thus act as a guide for centering the safety means 50 with respect to the cavity 232 defined by the central body 210 and by the outer body 230 of the truing means.

Guiding means 800 thus enable insertion of safety means 50 (for example, a seeger ring and/or one or more bearing discs) centred between the central body 210 and the outer body 230 of the truing means so that the safety means 50 can be introduced between groups of rollers 40 arranged around the central body 210 at different levels along the longitudinal axis R of the central body 210.

Guiding means 800 may, for example, have a substantially hollow conical shape. The outer surface of the guiding means may be a truncated cone. The guiding means may then comprise an inner through-cavity (through-hole) so as to guide safety means 50 toward the cavity 232 and centre them with respect to cavity 232. The inner cavity of the guiding means may advantageously be shaped as a truncated cone with a larger base corresponding to the opening through which the safety means 50 are introduced and a smaller base facing the opening 236 of the cavity 232 so as to effectively guide safety means 50 toward the cavity 232.

Figure 5(a) shows how safety means 50 may be inserted. Insertion may be accomplished manually or automatically by using mechanical means such as, for example, an automatic arm able to carry the safety means 50 until they are in correspondence to the entrance of the guiding means 800 and to drop them into the guiding means 800 so that they turn out to be centred with respect to central body 210. The safety means 50 may surround the central body 210 and be concentric thereto. The centre of the safety means 50 may then lie on the axis of longitudinal symmetry R of the central body 210. The safety means 50 may then comprise a first bearing disc, a seeger ring and a second bearing ring. Other combinations and configurations of safety means are also possible.

Figure 5(b) shows that pressing means 700 according to the embodiment shown in Figure 2 are further adapted to exert a force on the safety means 50 introduced into the cavity 232 of the truing means 200, so as to forcibly keep the safety means 50 in a predefined position along the longitudinal axis R of the cavity 232 and of the central body 210. Figure 5(b) indeed shows that pressing means 700 are lowered so as to push the safety means 50 down to a position above the first group of rollers 40d and below the level on axis R of the cavity 232 at which the second group of rollers 40c will be accommodated.

In particular, as shown in Figure 5(b), the abutting surface of the outer presser 712 abuts on the surface of the guiding means facing upwards. The abutting surface of the inner presser 711 then abuts onto the safety means 50 and, by exerting a downward pressure, pushes the safety means 50 into the hole of the guiding means until they abut onto the first group 40d of rollers 40. Safety means 50 and the group 40d of rollers 40 are then simultaneously pushed downwards by the inner presser 711, until a predetermined height along axis R is reached. This height may, for example, be such that the distance between the bearing disc of the safety means facing the opening 236 communicating with the cavity 232 and the opening 236 is roughly equal to the average length of the rollers 40. During the downward translation motion of the rollers 40d and of the safety means 50, the cylindrical body 310 may jointly translate, so as to accompany the motion of the rollers 40 and of the safety means 50.

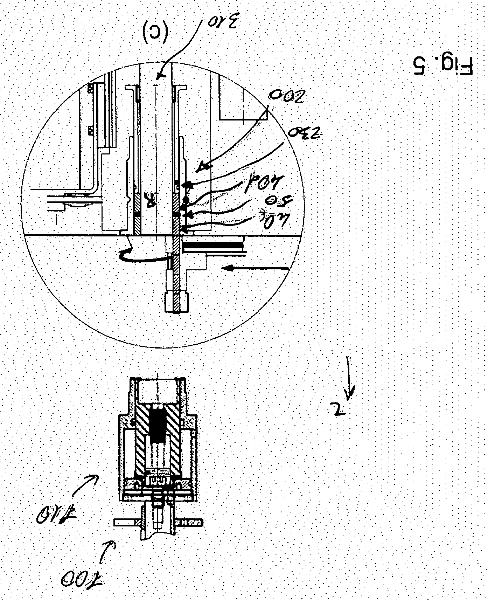

A series of safety means 50 is then introduced into the cavity 232 thanks to the guiding means 800 and the pressing means 700 according to the embodiment shown in Figure 2. The safety means 50 introduced into the cavity 232 comprise, as stated above, a first bearing disc, a seeger ring and a second bearing disc, wherein the seeger ring is interposed between the first bearing disc and the second bearing disc. After the safety means 50 have been introduced into the cavity 232, the first bearing disc is thus interposed between the group of rollers 40 arranged at level 40d and the seeger ring, whereas the second bearing disc facing the opening 236 is free. In this configuration, a second group 40c of rollers 40 can be introduced into the cavity as shown in Figure 5(c). The rollers 40 of the second group 40c will then abut onto the bearing disc of the safety means 50 facing the opening 236. Therefore, after the second group 40c of rollers 40 has been fully introduced, the first bearing disc of the safety means 50 is interposed between the group of rollers 40 arranged at level 4d and the seeger ring, whereas the second bearing disc is interposed between the seeger ring and the group of rollers 40 arranged at level 40c, as in the configuration shown in Figures 4 and 5(c).

After rollers 40 have been introduced in one or more groups into the cavity 232, with or without safety means 50 between adjacent groups of rollers 40, the rollers 40 may be introduced into the through-hole 22 of the outer casing, with rollers 40 inserted between the surface of the outer casing 20 facing the through-hole 22 and the portion 32 of central element 30 housed in through-hole 22. Such a procedure is accomplished by acting upon the cylindrical body 310 of the moving means 300 so as to translate it upwards along axis R, i.e. in the direction going from the bottom of cavity 232 to the opening 236 communicating with cavity 232.

It is here again referred to Figure 1(b). Rollers 40 belonging to the first group 40d introduced into the cavity 232, each having an end abutting onto the abutting surface 312 of the cylindrical body 310, experience a force exerted by the abutting surface 312 such as to cause the rollers 40 of first group 40d to simultaneously translate upward inside the cavity 232. Since the second group 40c of rollers 40 abut with first group 40d, the force exerted by the abutting surface 312 of the cylindrical body 310 onto each roller 40 of the first group 40d is transferred to the second group 40c of rollers 40. The rollers 40 of the second group 40c are thus caused to translate inside the cavity 232 in the same direction and by the same length as the translation of the cylindrical body 310 and of the first group 40d of rollers 40. From the second group 40c of rollers, the force directed upwards is then transferred to the rollers 40b of the second group and so on up to the first group 40a of rollers 40 which lie closest to the opening 236.

All the rollers in the cavity 232 are thus simultaneously translated by the same length by the force exerted by the cylindrical body 310. Furthermore, all the rollers 40 inside the cavity 232 are constrained to translate along their own longitudinal axis. Therefore, during the translation of rollers 40 inside cavity 232 of the truing means 200, the relative position of each roller 40 with respect to every other roller 40 remains unaltered.

Figures from 6(a) to 6(f) show subsequent stages of the assembly process of a mechanical system 10 obtained by using the device according to the first embodiment of the present invention shown in Figures 1(a) and 1(b).

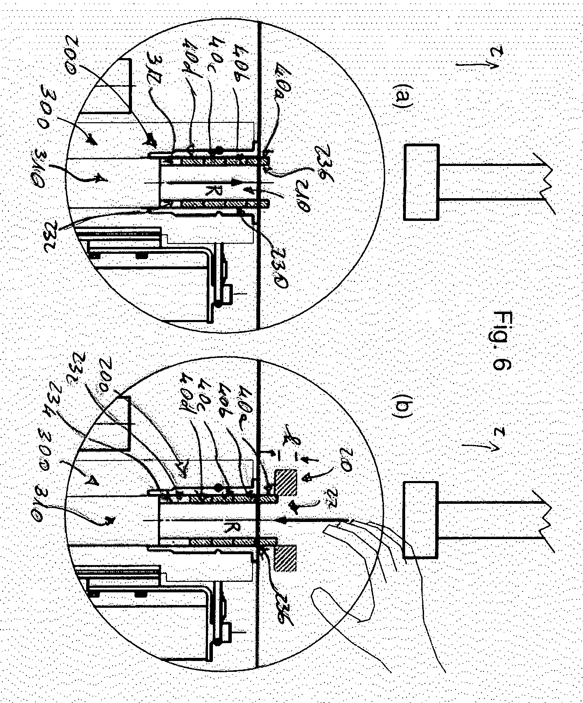

During the assembly stage of the mechanical system 10 shown in Figure 6(a), the cylindrical body 310 is translated until the abutting surface 310 reaches the height along axis R, such that the rollers 40 belonging to the closest group 40a to the opening 236 protrude outwards with respect to the cavity 232 by a predetermined portion of their length. The portion of total length by which the rollers 40 of group 40a protrude through opening 236 can be chosen in such a way that such a portion is less than the height h (i.e. the dimension along the longitudinal axis of the mechanical system 10) of the outer casing 20 of the mechanical system 10. The height h is indicated in Figure 6(b).

The assembly process continues by placing the outer casing 20 inside the device 1000 as shown in Figure 6(b). The outer casing 20 is arranged in correspondence to the opening 236 communicating with the cavity 232 of the truing means. The truing means 200 are designed in such a way that the larger diameter of the section of the cavity 232 (i.e. the diameter of the housing 234 defined by the outer body 230 of the truing means 200) is substantially equal to the diameter of the section of the through-hole 22 of the outer casing 20. The rollers 40 belonging to group 40a, a portion of which protrudes out of cavity 232 through aperture 236, act as a guide when arranging the outer casing in correspondence to the opening 236. More specifically, the central body 210 is placed in correspondence to opening 236 in such a way that the protruding portions of rollers 40 belonging to the group 40a abut on the surface of the outer casing facing the through-hole 22. In this manner, it is also easily obtained that the outer casing 20 is arranged in such a way that the longitudinal axis of the through-hole 22 is coincident with the longitudinal axis R of the cavity 232 and of the central body 210 of the truing means 200.

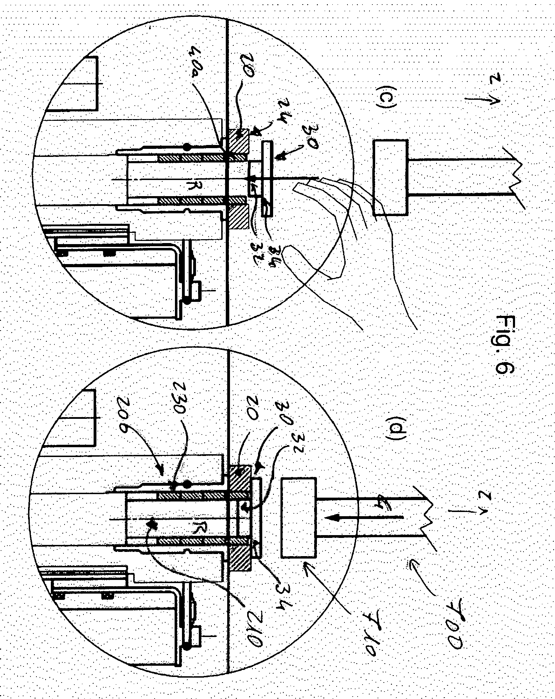

In Figure 6(c) the following step of the assembly process of mechanical system 10 is shown. In this step, the central element 30 is introduced by arranging it above the central casing 20 so that the covering element 34 abuts onto the upper edge 24 of the outer casing. The central element 30 is then positioned in such a way that the longitudinal axis of portion 32 housed in the through-hole 22 of the outer casing 20 has a longitudinal axis coincident with the longitudinal axis of through-hole 22 and, thus, with axis R.

Subsequently, as shown in Figure 6(d), one acts upon pressing means 700 so that the abutting surface 710 translates along the direction indicated by arrow G. The abutting element 710 is thus caused to translate in a direction parallel to axis R so as to get closer to the truing means 200.

The abutting element 710 has a surface facing the truing means 200 which abuts onto the surface of the covering element 34 of the central element 30 facing the abutting element 710, as shown in Figure 3(e). The abutting element 710 exerts on the central element 30 a reaction such as to counter all forces directed along axis R and having a sense in the positive sense of axis z.

It is now referred to Figure 6(e). After the abutting elements 710 abuts onto the central element 30 of the mechanical system 10, one acts again upon the cylindrical body 310 of the moving means 300 so as to cause a translation of the rollers 40 inside the cavity 232 along the positive direction of axis z. The rollers 40 are translated by a length such that the rollers 40 belonging to the closest group 40a to the opening 236 are introduced by their entire length into the through-hole 22 of the outer casing 20.

It is pointed out that due to the friction between the surface of the rollers and the surfaces of the outer casing 20 and of the central element 30 facing the through-hole 22, while the rollers 40 are translated upwards, both the outer casing 20 and the central element 30 experience a force which would tend to translate them upwards along a vertical direction. In order to oppose this affect, the abutting element 710 is used which opposes and counters all vertical forces pointing upwards exerted onto the central element 30 and/or the outer casing 20. In this manner, pressing elements 700 allow the positions of the central element 30 and of the outer casing 20 to remain unchanged while the rollers 40 are pushed by the cylindrical body 310 into the through-hole 22 of the outer casing 20.

The radius of the section of the portion 32 of central element 30 introduced into the through-hole 22 is then chosen so that the difference between the radius of the section of the through-hole 22 and the radius of the section of the portion 32 is substantially equal to the diameter of the section of the rollers 40. In this manner, the rollers 40 pushed into the through-hole 22 as shown in Figure 6(e) are positioned in such a way that their side surface abuts onto both the inner surface of the casing 20 facing through-hole 22 and the surface of the portion 32 facing the through-hole 22.

If the portion 32 of central element 30 is made of a material which can be deformed, such as for instance plastic, and if the radius of section 32 is chosen in such a way that the difference between the radius of the section of the through-hole 22 and the radius of the section of the portion 32 is slightly less than the diameter of the section of the rollers 40, than the rollers 40, after being pushed into the cavity and having occupied a position between the portion 34 of the central element and the outer casing 20, are kept in position by the pressure exerted by the portion 34 of central element 30.

During the last stage of the assembly process shown in Figure 6(f), the abutting element 710 of the pressing means 700 is translated upwards so as to move further from the truing means 200. Mechanical system 10 thus assembled may then be removed from the device 1000.

The mechanical system 10, assembled as shown in Figure 6(f), may be used in any sort of gears. For instance, the mechanical system 10 may be used in a system such as epicyclic or sun and planet gearing.

The Figures from 7(a) to 7(f) show the assembly stages of an analogous mechanical system 10 to the mechanical system whose assembly procedure is shown in Figures from 6(a) to 6(f). In Figures from 7(a) to 7(f) the device according to the second embodiment shown in Figure 2 is used.

In the mechanical system 10 shown, for example, in Figure 6(f), the central element 30 is a pin which may also be a false pin, whose length (dimension along the longitudinal axis) is equal to the length (dimension along the longitudinal axis) of the through-hole 22 of the outer casing 20.

The stages of the assembly procedure of mechanical system 10 schematically shown in the Figures from 7(a) to 7(f) correspond to the stages of the assembly process of the mechanical system 10 schematically shown in Figures from 6(a) to 6(f), respectively. The corresponding assembly stages are analogous in the two cases. Therefore, what has been said with reference to Figures 6(a) to 6(f) also holds true for Figures from 7(a) to 7(f), except for the necessary modifications.

A difference between the two cases is that in the assembly procedure shown in the Figures from 7(a) to 7(f), not only one group of rollers 40 is assembled into the system 10 but rather two groups 40a and 40b separated by a series of safety means 50, previously introduced into the truing means 200 as previously described with reference to the Figures from 5(a) to 5(c).

A further difference with respect to the case of the assembly of the Figures from 6(a) to 6(f) is shown in the Figure 7(e) and in its magnified view in Figure 8. Firstly, during the introduction stage of the closest group 40a of rollers 40 to the opening 236 into the through-hole 22 of the outer casing 20, the abutting element 710 of the pressing means 700 abuts onto the upper edge of both the central pin 30 and the outer casing 20. In this case, as well as in the previous one, the action of the pressing means, accomplished by means of the abutting element, is to cause the position of the outer casing 20 and of the central element 30 to be unchanged during the introduction of the rollers 40 into the through-hole 22 of the outer casing 20.

In particular, Figures 7(e) and 8 show that the pressing means 700 are lowered so as to exert a force on the outer casing 20 and on the pin or central element 30 when these are arranged in assembly position as shown in Figures 7(e) and 8. In particular, according to the embodiment of the device shown in the Figures from 7(a) to 7(f) and 8, pressing means 700 comprise an outer presser 712 adapted to exert a force on the outer casing 20 when this is arranged in assembly position with the through-hole in correspondence to the opening 236 communicating with cavity 232. Furthermore, pressing means 700 comprises a central presser 713 adapted to exert a force on the central pin 30 when this is arranged in an assembly position inside the through-hole 22 of the outer casing 20.

In this manner, the two groups 40a and 40b separated by the safety means may be inserted into the system 10 between the inner surface of the outer casing 20 and the pin 30 by means of moving means 300 by a movement in an opposite direction to that of the force exerted by the pressing means 700 on the outer casing 20 and on the pin 30, as schematically shown in Figures 7(e) and 8. In these figures, pressing means 700 keep the hollow outer element 20 and the pin 30 fixed by exerting a downward pressure through the outer presser 712 and the central presser 713, respectively. At the same time, the moving means 300 push upward the group of rollers 40a and 40b and the safety means 50 interposed between them, up to the desired assembly position. The outer presser 712 and/or the central presser 713 may further exert a force on the outer casing 20 and on the central body 30, respectively, directed along a normal plane to the vertical axis z, so as to maintain the outer casing 20 and the central body 30 in the position of the assembly stage in which they are arranged in correspondence to the truing means 200.

Such forces across the horizontal plane may, for instance, be exerted by the pressing means 700 by means of friction.

Advantageously, the surface of the through-hole 22 of the outer casing 20 comprises a groove 23 for housing the safety means 50 as shown, for example, in Figure 8, and the desired assembly position corresponds to the position wherein the safety means 50 engage in the groove 23.

At this point, the mechanical system 10 is assembled and can be removed from the device according to the present invention. Removing the mechanical system may be manually or automatically accomplished as shown in Figure 7(f).

The abutting element 710 of the pressing means 700 may comprise a lubricating system such that the rollers 40 in the assembled mechanical system 10 are lubricated by a dosed amount. In particular, lubrication may be accomplished after rollers 40 have been inserted into system 10 as shown in Figure 7(e). The lubrication by grease in a dosed amount is carried out in order to keep the rollers 40 in assembly arrangement in case the central element 30 is extracted from the system 10 in a later manipulation stage after the assembly stage of the mechanical system 10, in that only the sub-system comprised of the outer casing 20 and of the plurality of rollers 40 is required.

With reference to Figure 9, introduction means 400 may comprise a control system 430 for controlling the introduction of the rollers 40 into the cavity 232 between the central body 210 and the outer body 230 of the truing means 200. The control system 430 comprises two sensors 432 and 434. The sensor 434 is arranged in correspondence to the end of the introduction head 420. The sensor 434 is instead arranged in a position adjacent to the conduit 422 of the head 420 through which rollers 40 are introduced into cavity 232. More specifically, sensor 434 is arranged adjacent to the conduit 422 and in the direction of rotation of the outer body 230 with respect to the central body 210. In the example shown in Figure 9, the rotation of the outer body 230 is counter-clockwise.

Sensor 432 and 434 are adapted to assume two states: ON and OFF. In particular, sensors 432 and 434 are ON when below them a surface is present at a level along longitudinal axis R of aperture 236 permitting access to the cavity 232. In Figure 9, axis R is orthogonal to the plane of the Figure.

During the introduction process of rollers 40 into cavity 232, sensor 434 becomes active, i.e. commutates to the ON state when sensor 434 detects the passage below it of the second last introduced roller 40. During the filling stage wherein arm 440 is in the extended position shown in Figure 9, sensor 432 keeps ON in that it detects the presence of the surface 213 of the central body 210 below it.

In order to interrupt the introduction process of rollers 40 into cavity 232 after a group of rollers 40 has been fully introduced, sensors 432 and 434 can be jointly used. For example, if sensor 432 is ON and sensor 434 is alternatively ON and OFF, this indicates that insertion of a group of rollers has not been completed and the introduction process of rollers 40 into cavity 232 continues. On the other hand, if both sensors 432 and 434 are always ON, the arm 440 may be ordered to retreat the head 420 in direction B. When, during the translation of the head 210 in the direction B the sensor 432 passes above cavity 232, sensors 432 may detect the presence of a roller 40 below it (sensor 432 ON) or the presence of a void (sensor 432 OFF). In the first case, the translation of head 210 in the direction B continues up to the minimum extension of arm 440. This indeed indicates that a group of rollers 40 has been fully inserted. Conversely, if sensor 432 is OFF during its passage over cavity 232, this indicates the presence of a void between the rollers inserted into cavity 232. In this case, head 20 is caused to translate in the opposite direction, i.e. in the direction indicated by arrow D so that a new roller is introduced into the cavity. At this point, the state of the two sensors 432 and 434 are newly analyzed and compared and, if both are ON, the process described above is repeated until the introduction of a group of rollers has been completed.

Obviously, several modifications can be made to the embodiments of the device according to the present invention described and represented in the figures without departing from the scope and the range of the invention. It is pointed out that the scope and the range of protection of the present invention are defined by the claims.

For example, the central body 210 of the truing means 200 can be interchangeable, so as to have a diameter adapting to the diameter of the rollers 40. Similarly, the outer body 230 of the truing means 200 may be interchangeable, so as to define housings 234 of a diameter suitable for adapting to the diameter of the through-hole 22 of the outer casing 20.

The means of introduction of the rollers and/or supply means may comprise automatic systems for counting and dosing the rollers. Furthermore, the means of introduction of the rollers and/or the supply means may comprise systems adapted to accelerate the route of the rollers in the respective conduits. For instance, means of introduction of the rollers and/or supply means may comprise systems based on compressed air so as to push the rollers towards the outlet of the respective conduits.

## Claims

1. Device (1000) for assembling mechanical systems (10) comprising an external casing (20) which defines a cavity (22), a central element (30) having at least one portion housed in said cavity (22) of said external casing (20) and a plurality of needle rollers (40), each of said needle rollers (40) housed between said external casing (20) and said portion of said central element (30) housed in said cavity (22) of said external casing (20); said device (1000) comprising,
truing means (200) adapted to arrange each of said needle rollers (40) in such a way that each of said needle rollers (40) has longitudinal axis parallel to a predefined axis (R) and that said needle rollers (40) are arranged in two or more groups (40a, 40b, 40c, 40d), each group arranged at a corresponding level along said predefined axis (R), said needle rollers (40) belonging to each of said groups (40a, 40b, 40c, 40d) being arranged in a reciprocal position substantially corresponding to their final reciprocal position inside said mechanical systems (10);
said device (1000) further comprising,
moving means (300) adapted to simultaneously move said two or more groups (40a, 40b, 40c, 40d) of said needle rollers (40) along a direction substantially parallel to said predefined axis (R) so as to position at least one of said groups of said needle rollers (40) in a predefined position in which said at least two or more groups of said needle rollers (40) are assembled with said external casing (20) and said central element (30) of said mechanical system (10); wherein:
said predefined axis (R) is substantially vertical; and in that said device further comprises guiding means (800) adapted to enable inserting into said truing means (200) safety means (50), comprising for example a circlip and/or one or more bearing discs, centred about said predetermined axis (R) so as to enable insertion of said safety means (50) between groups of needle rollers (40) arranged at different levels along said predetermined axis (R).

2. Device according to claim 1 wherein said truing means (200) comprise a central body (210) substantially cylindrical housed in a housing (234) with circular section defined by an external body (230), the longitudinal axis of said central body (210) being coincident with the longitudinal axis of said housing (234) in said external body (230) and coincident with said predefined axis (R) and the section of said central body (210) having a diameter less than the diameter of the section of said housing (234) in said external body (230), so that the external surface (211) of said central body (210) facing said housing (234) and the internal surface (231) of said external body (230) facing said housing (234) define a cavity (232) having as a section an annulus with longitudinal axis coincident with said longitudinal axis of said central body (210), said cavity (232) being adapted to house said groups (40a, 40b, 40c, 40d) of said needle rollers (40), each of said needle rollers (40) housed in said cavity (232) having longitudinal axis parallel to the longitudinal axis of said cavity (232).

3. Device according to claim 2 wherein said moving means (300) comprise a hollow cylindrical body (310) adapted to be translated along a direction substantially parallel to its longitudinal axis inside said cavity (232) defined by said central body (210) and said external body (230) of said truing means (200), said cylindrical body (310) defining an abutting surface (312) substantially transversal to the longitudinal axis of said cylindrical body (310), said abutting surface (312) of said cylindrical body (310) being adapted to abut on one end of each of said needle rollers (40) so as to bring about a translation of said needle rollers (40) so as to transfer said needle rollers (40) from said truing means (200) to a predefined position where one or more groups of said needle rollers (40) are assembled with said external casing (20) and said central element (30) of said mechanical system (10).

4. Device according to claim 3 wherein said abutting surface (312) of said cylindrical body (310) of said moving means (300) is shaped as an annulus, said abutting surface abutting on a corresponding abutting surface of each of said needle rollers (40).

5. Device according to one of claims 2 to 4 wherein said central body (210) and said external body (230) of said truing means (200) are in relative circular motion about said common longitudinal axis of said central body (210) and said housing (234) in said external body (230) in which said central body (210) is housed, in such a way that the longitudinal axis of each of said needle rollers (40) housed in said cavity (232) of said truing means (200) carries out a rotation about said longitudinal axis of said central body (210) of said truing means (200) so as to enable the introduction of an entire group (40a, 40b, 40c, 40d) of needle rollers (40) in said cavity (232) of said truing means (200), said needle rollers (40) in each of said groups (40a, 40b, 40c, 40d) being arranged so as to completely enclose said central body (210) of said truing means (200).

6. Device according to one of claims 1 to 5 comprising introduction means (400) of said needle rollers (40) into said truing means (200), said introduction means (400) comprising an arm (440) extendable along a direction substantially perpendicular to said predefined axis (R) and one introduction head (420) fixedly connected to said extendable arm (440) adapted to introduce each of said needle rollers (40) into said truing means (200).

7. Device according to claim 6, when dependent on one of claims 3 to 6, wherein said introduction head (420) of said truing means (400) comprise a conduit (422) adapted to arrange said needle rollers (40) in such a way that said needle rollers (40) have longitudinal axis coincident with the longitudinal axis of said conduit (422), each of said needle rollers (40) being introduced from said conduit (422) into said cavity (232) between said central body (210) and said external body (230) of said truing means (200).

8. Device according to one of claims 1 to 7 further comprising supply means (600) for loading each of said needle rollers (40) into said truing means (200) said supply means (600) comprising a conduit (636) whose exit is placed in correspondence with said conduit (422) of said introduction head (420), in such a way that each of said needle rollers (40), emitted from said conduit (632) of said supply means (600), is introduced into said conduit (422) of said introduction head (420).

9. Device according to one of clams 1 to 8 further comprising pressing means (700) adapted to exert a reaction to a force exerted on said external casing (20) or on said central element (30), when they are placed in assembly position in correspondence with said truing means (200), in such a way that the position of said external casing (20) and said central element (30) remain unaltered during the assembly process of said mechanical system (10).

10. Device according to claim 9 wherein said pressing means are further adapted to exert a reaction to a force directed along said predetermined axis (R), said force being directed from said truing means (200) to said pressing means (700).

11. Device according to one of claims 9 and 10 wherein said pressing means (700) comprise one abutting element (710) which may translate along said predetermined axis (R).

12. Device according to one of claims 9 to 11 wherein said pressing means (700) further comprise a central presser (713) and an external presser (712), said central presser (713) being adapted to exert a force directly on said central element (30) of said mechanical system (10) during the assembly, when said portion (32) of said central element (30) adapted to be housed in said cavity (22) of said external casing (20) is inserted into said cavity (22) of said external casing (20) and said external presser (712) being adapted, during the assembly of said mechanical system (10), to exert a force on said external casing (20) when this is placed in proximity to said truing means (200).

13. Device according to one of claims 9 to 12, when dependent on claim 10, wherein said pressing means (700) further comprise an internal presser (711), said internal presser (711) being adapted to both centre with respect to said cavity (22) of said external casing (20) said portion (32) of said central element (30) adapted to be housed in said cavity (22) of said external casing (20), and insert said safety means (50) into said truing means (200) down to a predefined position along said predefined axis (R) with respect to which the longitudinal axis of said needle rollers (40) housed in said truing means (200) is parallel.

## Patentansprüche

1. Vorrichtung (1000) zum Zusammensetzen mechanischer Systeme (10), wobei die Vorrichtung ein Außengehäuse (20), das einen Hohlraum (22) definiert, ein zentrales Element (30), das wenigstens einen Abschnitt aufweist, der in dem genannten Hohlraum (22) des genannten Außengehäuses (20) aufgenommen ist, und mehrere Nadelrollen (40), wobei jede der genannten Nadelrollen (40) zwischen dem genannten Außengehäuse (20) und dem genannten Abschnitt des genannten zentralen Elements (30), der in dem genannten Hohlraum (22) des genannten Außengehäuses (20) aufgenommen ist, aufgenommen ist, umfasst; wobei die genannte Vorrichtung (1000) umfasst:
Zentriermittel (200), die dafür ausgelegt sind, jede der genannten Nadelrollen (40) in der Weise anzuordnen, dass jede der genannten Nadelrollen (40) eine Längsachse aufweist, die parallel zu einer vordefinierten Achse (R) ist, und dass die genannten Nadelrollen (40) in zwei oder mehr Gruppen (40a, 40b, 40c, 40d) angeordnet sind, wobei jede Gruppe auf einer entsprechenden Höhe entlang der genannten vordefinierten Achse (R) angeordnet ist, wobei die genannten Nadelrollen (40), die zu jeder der genannten Gruppen (40a, 40b, 40c, 40d) gehören, in einer gegenseitigen Position angeordnet sind, die im Wesentlichen ihrer gegenseitigen Endposition innerhalb der genannten mechanischen Systeme (10) entspricht;
wobei die genannte Vorrichtung (1000) ferner umfasst:
Bewegungsmittel (300), die dafür ausgelegt sind, die genannten zwei oder mehr Gruppen (40a, 40b, 40c, 40d) der genannten Nadelrollen (40) entlang einer Richtung im Wesentlichen parallel zu der genannten vordefinierten Achse (R) gleichzeitig zu bewegen, um wenigstens eine der genannten Gruppen der genannten Nadelrollen (40) an einer vordefinierten Position zu positionieren, an der die genannten wenigstens zwei oder mehr Gruppen der genannten Nadelrollen (40) mit dem genannten Außengehäuse (20) und dem genannten zentralen Element (30) des genannten mechanischen Systems (10) zusammengesetzt sind; wobei die genannte vordefinierten Achse (R) im Wesentlichen vertikal ist: und wobei die genannte Vorrichtung ferner Führungsmittel (800) umfasst, die dafür ausgelegt sind, das Einführen von Sicherungsmitteln (50), die z. B. einen Sicherungsring und/oder eine oder mehrere Lagerscheiben umfassen, die um die genannte vorgegebene Achse (R) zentriert sind, in die genannten Zentriermittel (200) zu ermöglichen, um die Einführung der genannten Sicherungsmittel (50) zwischen Gruppen von Nadelrollen (40), die entlang der genannten vorgegebenen Achse (R) auf verschiedenen Höhen angeordnet sind, zu ermöglichen.

2. Vorrichtung gemäß Anspruch 1, wobei die genannten Zentriermittel (200) einen zentralen Körper (210) umfassen, der in einem Gehäuse (234) mit kreisförmigem Querschnitt, das durch einen Außenkörper (230) definiert ist, im Wesentlichen zylindrisch aufgenommen ist, wobei die Längsachse des genannten zentralen Körpers (210) in dem genannten Außenkörper (230) mit der Längsachse des genannten Gehäuses (234) zusammenfällt und mit der genannten vorgegebenen Achse (R) zusammenfällt und wobei der Querschnitt des genannten zentralen Körpers (210) einen kleineren Durchmesser als der Querschnitt des genannten Gehäuses (234) in dem genannten Außenkörper (230) aufweist, so dass die Außenoberfläche (211) des genannten zentralen Körpers (210), die dem genannten Gehäuse (234) zugewandt ist, und die Innenoberfläche (231) des genannten Außenkörpers (230), die dem genannten Gehäuse (234) zugewandt ist, einen Hohlraum (232) definieren, der als Querschnitt einen Kreisring mit einer Längsachse aufweist, die mit der genannten Längsachse des genannten zentralen Körpers (210) zusammenfällt, wobei der genannte Hohlraum (232) dafür ausgelegt ist, die genannten Gruppen (40a, 40b, 40c, 40d) der genannten Nadelrollen (40) aufzunehmen, wobei jede der genannten Nadelrollen (40) in dem genannten Hohlraum (232), der eine Längsachse parallel zu der Längsachse des genannten Hohlraums (232) aufweist, aufgenommen ist.

3. Vorrichtung gemäß Anspruch 2, wobei die genannten Bewegungsmittel (300) einen hohlen zylindrischen Körper (310) umfassen, der dafür ausgelegt ist, entlang einer Richtung im Wesentlichen parallel zu seiner Längsachse innerhalb des genannten Hohlraums (232), der durch den genannten zentralen Körper (210) und durch den genannten Außenkörper (230) der genannten Zentriermittel (200) definiert ist, verschoben zu werden, wobei der genannte zylindrische Körper (310) eine Stoßfläche (312) definiert, die zu der Längsachse des genannten zylindrischen Körpers (310) im Wesentlichen quer ist, wobei die genannte Stoßfläche (312) des genannten zylindrischen Körpers (310) dafür ausgelegt ist, an einem Ende jeder der genannten Nadelrollen (40) anzuliegen, um eine Verschiebung der genannten Nadelrollen (40) hervorzurufen, um die genannten Nadelrollen (40) von den genannten Zentriermitteln (200) an eine vorgegebene Position zu verlagern, in der eine oder mehrere Gruppen der genannten Nadelrollen (40) mit dem genannten Außengehäuse (20) und mit dem genannten zentralen Element (30) des genannten mechanischen Systems (10) zusammengesetzt sind.

4. Vorrichtung gemäß Anspruch 3, wobei die Stoßfläche (312) des genannten zylindrischen Körpers (310) der genannten Bewegungsmittel (300) als ein Kreisring geformt ist, wobei die genannte Stoßfläche an einer entsprechenden Stoßfläche jeder der genannten Nadelrollen (40) anliegt.

5. Vorrichtung gemäß einem der Ansprüche 2 bis 4, wobei der genannte zentrale Körper (210) und der genannte Außenkörper (230) der genannten Zentriermittel (200) um die genannte gemeinsame Längsachse des genannten zentralen Körpers (210) und des genannten Gehäuses (234) in dem genannten Außenkörper (230), in dem der genannte zentrale Körper (210) aufgenommen ist, in der Weise in kreisförmiger Relativbewegung stehen, dass die Längsachse jeder der genannten Nadelrollen (40), die in dem genannten Hohlraum (232) der genannten Zentriermittel (200) aufgenommen sind, eine Drehung um die genannte Längsachse des genannten zentralen Körpers (210) der genannten Zentriermittel (200) ausführt, um die Einführung einer gesamten Gruppe (40a, 40b, 40c, 40d) der Nadelrollen (40) in den genannten Hohlraum (232) der genannten Zentriermittel (200) zu ermöglichen, wobei die genannten Nadelrollen (40) in der Weise in jeder der genannten Gruppen (40a, 40b, 40c, 40d) angeordnet sind, dass sie den genannten zentralen Körper (210) der genannten Zentriermittel (200) vollständig einschließen.

6. Vorrichtung gemäß einem der Ansprüche 1 bis 5, wobei die Vorrichtung Einführungsmittel (400) der genannten Nadelrollen (40) in die genannten Zentriermittel (200) umfasst, wobei die genannten Einführungsmittel (400) einen Arm (440), der entlang einer Richtung im Wesentlichen senkrecht zu der genannten vordefinierten Achse (R) ausfahrbar ist, und einen Einführungskopf (420), der mit dem genannten ausfahrbaren Arm (440) fest verbunden ist, der dafür ausgelegt ist, jede der genannten Nadelrollen (40) in die genannten Zentriermittel (200) einzuführen, umfassen.

7. Vorrichtung gemäß Anspruch 6, wenn abhängig von einem der Ansprüche 3 bis 6, wobei der genannte Einführungskopf (420) der genannten Zentriermittel (400) eine Röhre (422) umfasst, die dafür ausgelegt ist, die genannten Nadelrollen (40) in der Weise anzuordnen, dass die genannten Nadelrollen (40) eine Längsachse aufweisen, die mit der Längsachse der genannten Röhre (422) zusammenfällt, wobei jede der genannten Nadelrollen (40) aus der genannten Röhre (422) in den genannten Hohlraum (232) zwischen dem genannten zentralen Körper (210) und dem genannten Außenkörper (230) der genannten Zentriermittel (200) eingeführt wird.

8. Vorrichtung gemäß einem der Ansprüche 1 bis 7, die ferner Zuführungsmittel (600) umfasst, um jede der genannten Nadelrollen (40) in die genannten Zentriermittel (200) zu laden, wobei die genannten Zuführungsmittel (600) eine Röhre (636) umfassen, deren Auslass in der Weise entsprechend der genannten Röhre (422) des genannten Einführungskopfs (420) platziert ist, dass jede der genannten Nadelrollen (40), die aus der genannten Röhre (632) der genannten Zuführungsmittel (600) ausgestoßen wird, in die genannte Röhre (422) des genannten Einführungskopfs (420) eingeführt wird.

9. Vorrichtung gemäß einem der Ansprüche 1 bis 8, die ferner Druckmittel (700) umfasst, die, wenn sie entsprechend den genannten Zentriermitteln (200) in der Zusammensetzungsposition platziert sind, dafür ausgelegt sind, auf eine auf das genannte Außengehäuse (20) oder auf das genannte zentrale Element (30) ausgeübte Kraft in der Weise eine Gegenwirkung auszuüben, dass die Positionen des genannten Außengehäuses (20) und des genannten zentralen Elements (30) während des Zusammensetzungsprozesses des genannten mechanischen Systems (10) ungeändert bleiben.

10. Vorrichtung gemäß Anspruch 9, wobei die genannten Druckmittel ferner dafür ausgelegt sind, auf eine entlang der genannten vorgegebenen Achse (R) gerichtete Kraft eine Gegenwirkung auszuüben, wobei die genannte Kraft von den Zentriermitteln (200) zu den genannten Druckmitteln (700) gerichtet ist.

11. Vorrichtung gemäß einem der Ansprüche 9 und 10, wobei die Druckmittel (700) ein Stoßelement (710) umfassen, das sich entlang der genannten vorgegebenen Achse (R) verschieben kann.

12. Vorrichtung gemäß einem der Ansprüche 9 bis 11, wobei die genannten Druckmittel (700) ferner eine zentrale Druckeinrichtung (713) und eine äußere Druckeinrichtung (712) umfassen, wobei die genannte zentrale Druckeinrichtung (713) dafür ausgelegt ist, während des Zusammensetzens direkt auf das genannte zentrale Element (30) des genannten mechanischen Systems (10) eine Kraft auszuüben, wenn der genannte Abschnitt (32) des genannten zentralen Elements (30), der dafür ausgelegt ist, in dem genannten Hohlraum (22) des genannten Außengehäuses (20) aufgenommen zu werden, in den genannten Hohlraum (22) des genannten Außengehäuses (20) eingeführt wird, und wobei die genannte äußere Druckeinrichtung (712) dafür ausgelegt ist, während des Zusammensetzens des genannten mechanischen Systems (10) eine Kraft auf das genannte Außengehäuse (20) auszuüben, wenn dieses in der Nähe der genannten Zentriermittel (200) angeordnet ist.

13. Vorrichtung gemäß einem der Ansprüche 9 bis 12, wenn abhängig von Anspruch 10, wobei die genannten Druckmittel (700) ferner eine Innendruckeinrichtung (711) umfassen, wobei die genannte Innendruckeinrichtung (711) dafür ausgelegt ist, sowohl den genannten Abschnitt (32) des genannten zentralen Elements (30), der dafür ausgelegt ist, in dem genannten Hohlraum (22) des genannten Außengehäuses (20) aufgenommen zu werden, in Bezug auf den genannten Hohlraum (22) des genannten Außengehäuses (20) zu zentrieren, als auch die genannten Sicherungsmittel (50) in die genannten Zentriermittel (200) bis an eine vordefinierte Position entlang der genannten vordefinierten Achse (R), in Bezug auf die die Längsachsen der genannten Nadelrollen (40), die in den Zentriermittel (200) aufgenommen sind, parallel sind, einzuführen.

## Revendications

1. Dispositif (1000) pour l'assemblage de systèmes mélaniques (10) comprenant un boîtier externe (20) qui définit une cavité (22), un élément central (30) présentant au moins une partie logée dans ladite cavité (22) dudit boîtier externe (20) et une pluralité de paliers à aiguilles (40), chacun desdits paliers à aiguilles (40) étant logé entre ledit boîtier externe (20) et ladite partie dudit élément central (30) logé dans ladite cavité (22) dudit boîtier externe (20) ; ledit dispositif (1000) comprenant
des moyens de dressage (200) adaptés pour agencer chacun desdits paliers à aiguilles (40) de telle manière que chacun desdits paliers à aiguilles (40) présente un axe longitudinal parallèle à un axe prédéfini (R) et que lesdits paliers à aiguilles (40) soient agencés en deux ou plus groupes (40a, 40b, 40c, 40d), chaque groupe étant agencé sur un niveau correspondant le long desdits axes prédéfinis (R), lesdits paliers à aiguilles (40) appartenant à chacun desdits groupes (40a, 40b, 40c, 40d) étant agencés dans une position alternative correspondant sensiblement à leur position alternative finale dans lesdits systèmes mécaniques (10) ;
ledit dispositif (1000) comprenant en outre
des moyens mobiles (300) adaptés pour déplacer simultanément lesdits deux ou plus groupes (40a, 40b, 40c, 40d) desdits paliers à aiguilles (40) le long d'une direction sensiblement parallèle audit axe prédéfini (R) de sorte à positionner au moins un desdits groupes desdits paliers à aiguilles (40) dans une position prédéfinie, dans laquelle lesdits au moins deux ou plus groupes desdits paliers à aiguilles (40) sont assemblés avec ledit, boîtier externe (20) et ledit élément central (30) dudit système mécanique (10) ; dans lequel
ledit axe prédéfini (R) est sensiblement vertical ; et en ce que ledit dispositif comprend en outre des moyens de guidage (800) adaptés pour permettre l'insertion dans lesdits moyens de dressage (200) des moyens de sécurité (50), comprenant par exemple un circlip et/ou un ou plusieurs disques porteurs, centrés autour dudit axe prédéterminé (R) de sorte à permettre l'insertion desdits moyens de sécurité (50) entre des groupes de paliers à aiguilles (40) agencés à différents niveaux le long dudit axe prédéterminé (R).

2. Dispositif selon la revendication 1, dans lequel lesdits moyens de dressage (200) comprennent un corps central (210) logé sensiblement cylindriquement dans un boîtier (234) avec une section circulaire définie par un corps externe (230), l'axe longitudinal dudit corps central (210) étant coïncident avec l'axe longitudinal dudit logement (234) dans ledit corps externe (230) et coïncident avec ledit axe prédéfini (R) et la section dudit corps central (210) présentant un diamètre inférieur au diamètre de la section dudit logement (234) dans ledit corps externe (230) de sorte que la surface externe (211) dudit corps central (210) faisant face audit logement (234) et la surface interne (231) dudit corps externe (230) faisant face audit logement (234) définissent une cavité (232) présentant comme section un anneau avec un axe longitudinal coïncident avec ledit axe longitudinal dudit corps central (210), ladite cavité (232) étant adaptée pour loger lesdits groupes (40a, 40b, 40c, 40d) desdits paliers à aiguilles (40), chacun desdits paliers à aiguilles (40) logés dans ladite cavité (232) présentant un axe longitudinal parallèle à l'axe longitudinal de ladite cavité (232).

3. Dispositif selon la revendication 2, dans lequel lesdits moyens mobiles (300) comprennent un corps cylindrique creux (310) adapté pour être translaté le long d'une direction sensiblement parallèle à son axe longitudinal dans ladite cavité (232) définie par ledit corps central (210) et ledit corps externe (230) desdits moyens de dressage (200), ledit corps cylindrique (310) définissant une surface de butée (312) sensiblement transversale à l'axe longitudinal dudit corps cylindrique (310), ladite surface de butée (312) dudit corps cylindrique (310) étant adaptée pour buter contre une extrémité de chacun desdits paliers à aiguilles (40) de sorte à entraîner une translation desdits paliers à aiguilles (40) afin de transférer lesdits paliers à aiguilles (40) desdits moyens de dressage (200) à une position prédéfinie où un ou plusieurs groupes desdits paliers à aiguilles (40) sont assemblés avec ledit boîtier externe (20) et ledit élément central (30) dudit système mécanique (10).

4. Dispositif selon la revendication 3, dans lequel ladite surface de butée (312) dudit corps cylindrique (310) desdits moyens mobiles (300) est formée comme un anneau, ladite surface de butée butant contre une surface de butée correspondante de chacun desdits paliers à aiguilles (40).

5. Dispositif selon l'une quelconque des revendications 2 à 4, dans lequel ledit corps central (210) et ledit corps externe (230) desdits moyens de dressage (200) sont dans un mouvement circulaire relatif autour dudit axe longitudinal commun dudit corps central (210) et dudit logement (234) dans ledit corps externe (230), dans lequel ledit corps central (210) est logé de telle manière que l'axe longitudinal de chacun desdits paliers à aiguilles (40) logés dans ladite cavité (232) desdits moyens de dressage (200) réalise une rotation autour dudit axe longitudinal dudit corps central (210) desdits moyens de dressage (200) de sorte à permettre l'introduction d'un groupe entier (40a, 40b, 40c, 40d) de paliers à aiguilles (40) dans ladite cavité (232) desdits moyens de dressage (200), lesdits paliers à aiguilles (40) dans chacun desdits groupes (40a, 40b, 40c, 40d) étant agencés de sorte à enfermer complètement ledit corps central (210) desdits moyens de dressage (200).

6. Dispositif selon l'une quelconque des revendications 1 à 5, comprenant des moyens d'introduction (400) desdits paliers à aiguilles (40) dans lesdits moyens de dressage (200), lesdits moyens d'introduction (400) comprenant un bras (440) extensible le long d'une direction sensiblement perpendiculaire audit axe prédéfini (R) et une tête d'introduction (420) reliée fixement audit bras extensible (440), adaptée pour introduire chacun desdits paliers à aiguilles (40) dans lesdits moyens de dressage (200).

7. Dispositif selon la revendication 6 lorsqu'elle dépend de l'une quelconque des revendications 3 à 6, dans lequel ladite tête d'introduction (420) desdits moyens de dressage (400) comprend un conduit (422) adapté pour agencer lesdits paliers à aiguilles (40) de telle manière que lesdits paliers à aiguilles (40) aient un axe longitudinal coïncident avec l'axe longitudinal dudit conduit (422), chacun desdits paliers à aiguilles (40) étant introduit dudit conduit (422) dans ladite cavité (232) entre ledit corps central (210) et ledit corps externe (230) desdits moyens de dressage (200).

8. Dispositif selon l'une quelconque des revendications 1 à 7, comprenant en outre des moyens d'alimentation (600) pour charger chacun desdits paliers à aiguilles (40) dans lesdits moyens de dressage (200), lesdits moyens d'alimentation (600) comprenant un conduit (636), dont la sortie est placée en correspondance avec ledit conduit (422) de ladite tête d'introduction (420) de telle manière que chacun desdits paliers à aiguilles (40) émis dudit conduit (632) desdits moyens d'alimentation (600), soit introduit dans ledit conduit (422) de ladite tête d'introduction (420).

9. Dispositif selon l'une quelconque des revendications 1 à 8, comprenant en outre des moyens de pressage (700) adaptés pour exercer une réaction sur une force exercée sur ledit boiter externe (20) ou sur ledit élément central (30) lorsqu'ils sont placés en position d'assemblage en correspondance avec lesdits moyens de dressage (200) de telle manière que la position dudit boîtier externe (20) et dudit élément central (30) reste inchangée pendant le processus d'assemblage dudit système mécanique (10).

10. Dispositif selon la revendications 9, dans lequel lesdits moyens de pressage sont en outre adaptés pour exercer une réaction sur une force dirigée lie long dudit axe prédéterminé (R), ladite force étant dirigée desdits moyens de dressage (200) auxdits moyens de pressage (700).

11. Dispositif selon l'une quelconque des revendications 9 et 10, dans lequel lesdits moyens de pressage (700) comprennent un élément de butée (710) qui peut translater le long dudit axe prédéterminé (R).

12. Dispositif selon l'une quelconque des revendications 9 à 11, dans lequel lesdits moyens de pressage (700) comprennent en outre un presseur central (713) et un presseur externe (712), ledit presseur central (713) étant adapté pour exercer une force directement sur ledit élément central (30) dudit système mécanique (10) pendant l'assemblage, lorsque ladite partie (32) dudit élément central (30) adapté pour être logé dans ladite cavité (22) dudit boîtier externe (20) est insérée dans ladite cavité (22) dudit boîtier externe (20) et ledit presseur externe (712) étant adapté pendant l'assemblage dudit système mécanique (10) pour exercer une force sur ledit boîtier externe (20) lorsqu'il est placé à proximité desdits moyens de dressage (200).

13. Dispositif selon l'une quelconque des revendications 9 à 12, lorsqu'elle dépend de la revendication 10, dans lequel lesdits moyens de pressage (700) comprennent en outre un presseur interne (711), ledit presseur interne (711) étant adapté à la fois pour centrer par rapport à ladite cavité (22) dudit boîtier externe (20) ladite partie (32) dudit élément central (30) adapté pour être logé dans ladite cavité (22) dudit boîtier externe (20), et insérer lesdits moyens de sécurité (50) dans lesdits moyens de dressage (200) vers le bas jusqu'à une position prédéfinie le long dudit axe prédéfini (R), par rapport auquel l'axe longitudinal desdits paliers à aiguilles (40) logés dans lesdits moyens de dressage (200) est parallèle.
